# EUROPÄISCHE PATENTSCHRIFT

(11) **EP 2 571 123 B1**
(45) Veröffentlichungstag und Bekanntmachung des Hinweises auf die Patenterteilung: **26.11.2014**
(21) Anmeldenummer: 12171583.3
(22) Anmeldetag: 12.06.2012
(51) Int. Cl.: H02G 3/12, H02G 3/14, H01H 13/70, H04M 1/02, H04M 11/02, H04N 7/18

(54) **Elektrisches/elektronisches Installationsgerät**
Electric/electronic installation device
Appareil d'installation électrique/électronique

(30) Priorität: 15.09.2011 DE 102011053625
(43) Veröffentlichungstag der Anmeldung: 20.03.2013
(73) Patentinhaber: Albrecht Jung GmbH & Co. KG, 58579 Schalksmühle (DE)
(72) Erfinder: Gebhardt, Marc, 58579 Schalksmühle (DE); Bonventre, Giancarlo, 58509 Lüdenscheid (DE)

(56) Entgegenhaltungen:
- EP-A1- 2 107 767
- US-A1- 2003 095 185
- US-B1- 6 429 893

## Beschreibung

Die vorliegende Erfindung geht von einem gemäß Oberbegriff des Hauptanspruches konzipierten elektrischen/elektronischen Installationsgerät aus.

Derartige elektrische/elektronische Installationsgeräte sind in der Regel dafür vorgesehen, auf besonders komfortable Art und Weise eine Vielzahl von in Gebäuden installierte Aktoren und Sensoren (Jalousieantriebe, Beleuchtungseinrichtungen, Fühler, Wächter usw.) bedarfsgerecht zu beeinflussen. Zu diesem Zweck sind die unterschiedlichsten Installationsgeräte, wie Schalter, Taster, Dimmer, Schaltaktoren, Klimaaktoren, Touchpanel usw. bekannt geworden. Oftmals sind solche elektrischen/elektronischen Installationsgeräte zum Anschluss an ein Bussystem vorgesehen. In letzter Zeit sind die Bedieneinheiten solcher elektrischen/elektronischen Installationsgeräte oftmals mit einem Bildschirm ausgerüstet, der auch als sogenannter "Touchscreen" ausgeführt sein kann. Dabei sind auch elektrische/elektronische Installationsgeräte bekannt geworden, welche mit einer Lautsprechereinrichtung ausgerüstet sind, um zum Beispiel auch als Türkommunikationsgerät, Radiogerät usw. Anwendung zu finden.

Durch die EP 2 107 767 A1 ist ein dem Oberbegriff des Hauptanspruches entsprechendes elektrisches/elektronisches Installationsgerät bekannt geworden. Dieses elektrische/elektronische Installationsgerät ist als Türkommunikationsgerät der Gebäudesystemtechnik ausgeführt und an das Installationssystem eines Gebäudes anschließbar, weshalb dieses entsprechende Kontaktteile aufweist. Des Weiteren weist dieses elektrische/elektronische Installationsgerät eine Bedieneinheit auf. Mehrere elektrische Leiterplatten und die zur Funktion notwendigen Kontaktteile sind Bestandteil eines Sockelteils, welches zur Aufputzmontage vorgesehen ist. Letztendlich ist ein solches elektrisches/elektronisches Installationsgerät mit einer Lautsprechereinrichtung ausgerüstet. Eine derartig ausgeführte Lautsprechereinrichtung benötigt innerhalb des elektrischen/elektronischen Installationsgerätes jedoch einen großen Bauraum, weil jeder der beiden Schallaustrittsöffnungen ein eigener, vom Lautsprecher ausgehender Schallkanal zugeordnet ist. Jeder dieser beiden Schallkanäle benötigt für seine Unterbringung innerhalb des elektrischen/elektronischen Installationsgerätes einen beachtlichen Bauraum.

Durch die DE 10 2007 045 870 A1 ist ebenfalls ein dem Oberbegriff des Hauptanspruches entsprechendes elektrisches/elektronisches Installationsgerät bekannt geworden. Dieses elektrische/elektronische Installationsgerät ist für den Anschluss an ein Bussystem der Gebäudesystemtechnik vorgesehen und weist deshalb entsprechende Kontaktteile auf. Des Weiteren weist dieses elektrische/elektronische Installationsgerät eine Bedieneinheit auf. Mehrere elektrische Leiterplatten und die zur Funktion notwendigen Kontaktteile sind Bestandteil eines Sockelteils, welches zur Montage in eine Unterputzdose vorgesehen ist. Zudem bildet ein Designrahmen eine formschöne Umfassung. Letztendlich ist ein solches elektrisches/elektronisches Installationsgerät mit einer Lautsprechereinrichtung ausgerüstet. Eine derartig ausgeführte Lautsprechereinrichtung tritt bei diesem elektrischen/elektronischen Installationsgerät recht augefällig in Erscheinung, weil der Schallaustrittsbereich eine vergleichsweise große Fläche aufweist.

Zudem ist durch die US 2003/0095185 A1 ein als Türkommunikationsgerät ausgeführtes elektrisches/elektronisches Installationsgerät bekannt geworden, bei welchem ein als Touchscreen ausgeführter Bildschirm Verwendung findet.

Außerdem ist durch die US 6 429 893 B1 ein elektrisches/elektronisches Installationsgerät bekannt geworden, bei welchem die vorhandene Schallaustrittsöffnung mit einer Gitterstruktur versehen ist.

Ausgehend von derart ausgebildeten elektrischen/elektronischen Installationsgeräten liegt der vorliegenden Erfindung die Aufgabe zugrunde, ein elektrisches/elektronisches Installationsgerät zu schaffen, bei welchem bei guter akustischer Wiedergabe der Schallaustrittsbereich nicht augenfällig in Erscheinung tritt.

Erfindungsgemäß wird diese Aufgabe durch die im Hauptanspruch angegebenen Merkmale gelöst.

Bei einer solchen Ausbildung ist besonders vorteilhaft, dass durch den Schallkanal eine gute Akustik erzeugt wird und die beiden Schallaustrittsbereiche lediglich durch zwei kleine Öffnungen im Randbereich der Bedieneinheit realisiert sind, so dass das Design bzw. Erscheinungsbild des elektrischen/elektronischen Gerätes nicht gestört wird.

Weitere vorteilhafte Ausgestaltungen des erfindungsgemäßen Gegenstandes sind in den Unteransprüchen angegeben. Anhand eines Ausführungsbeispieles sei der erfindungsgemäße Gegenstand im Prinzip näher erläutert, dabei zeigen:

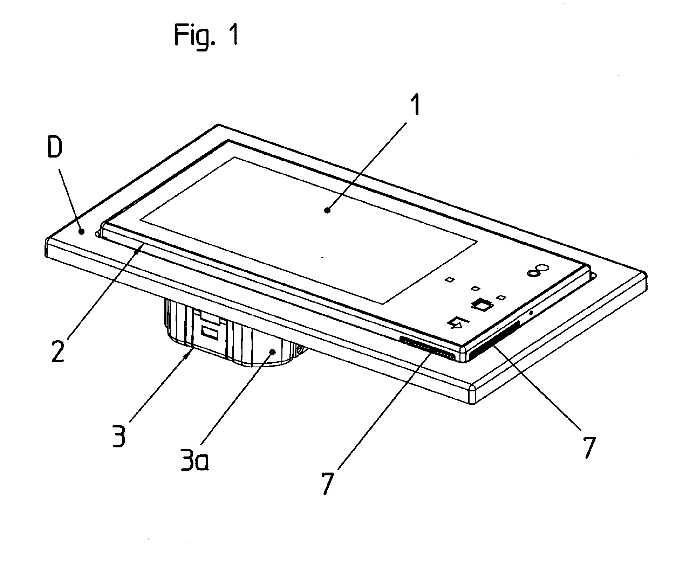

- Fig. 1:: prinziphaft ein elektrisches/elektronisches Installationsgerätes räumlich in Draufsicht, mit Designrahmen,

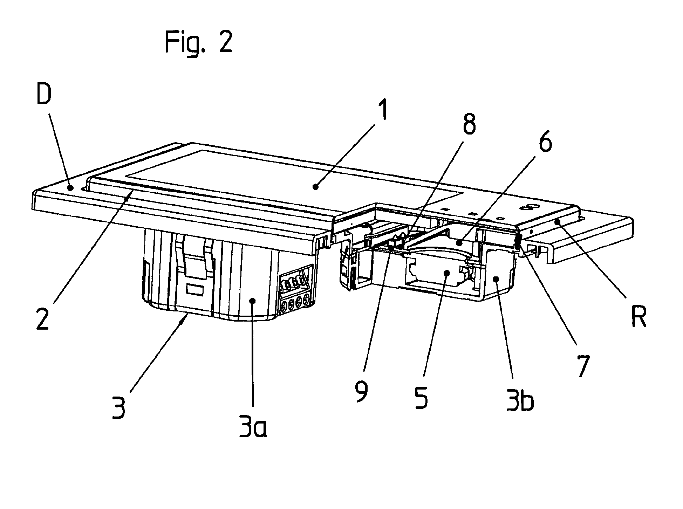

- Fig. 2:: prinziphaft ein elektrisches/elektronisches Installationsgerätes räumlich in der Seitenansicht, im Teilschnitt.

Wie aus den Figuren hervorgeht, besteht ein solches elektrisches/elektronisches Installationsgerät der Gebäudesystemtechnik hauptsächlich aus einer, einen Bildschirm 1 aufweisenden Bedieneinheit 2 und einem, zumindest eine Leiterplatte sowie Kontaktteile aufweisenden Sockelteilanordnung 3 sowie einem eine formschöne Umfassung bildenden Designrahmen D.

Die Sockelteilanordnung 3 weist einen ersten Sockelteilbereich 3a auf, der hauptsächlich die zum einwandfreien Betrieb der Bedieneinheit 2 und die zum Anschluss des elektrischen/elektronischen Gerätes an ein Netzwerk bzw. Bussystem des Gebäudes notwendigen Funktionselemente aufweist. Der zweite Sockelbereich 3b der Sockelteilanordnung 3 ist hauptsächlich zur Aufnahme der Lautsprechereinrichtung bzw. des Lautsprechers 5 vorgesehen. Dem in der Sockelteilanordnung 3 bzw. im zweiten Sockelteilbereich 3b befindliche Lautsprecher 5 ist einerseits ein Schallkanal 6 zugeordnet, der andererseits in Zuordnung zweier, in der Bedieneinheit 2 vorhandener Schallaustrittsöffnungen 7 endet. Die beiden Schallaustrittsöffnungen 7 befinden sich in dem für die direkte Zuordnung des Designrahmens D vorgesehenen Randbereich der Bedieneinheit 2. Die Lautsprechereinrichtung weist eine Leiterplatte 8 auf, die mit den zur einwandfreien Funktion notwendigen Bauteilen bestückt ist.

Um eine akustische Trennung des Lautsprechers 5 zu realisieren, ist eine Dichtung 9 vorgesehen. Die Dichtung 9 dichtet den Lautsprecher 5 zur Leiterplatte 8, zum Schallkanal 6 und zum Innenraum des Sockelteilbereiches 3b hin ab. Somit ist für eine besonders gute Klangqualität Sorge getragen.

Die Bedieneinheit 2 ist, wie bereits beschrieben, von einem Designrahmen D umgeben, und weist einen als Touchscreen ausgeführten Bildschirm 1 auf. Ein solcher als Touchscreen ausgeführter Bildschirm ist nicht nur zur Anzeige, sondern auch zur Bedienung vorgesehen. Zusätzlich weist die Bedieneinheit 2 auf ihrer zur Bedienung vorgesehenen Hauptfläche mehrere Bedienelemente auf, welche manuell wie ein Tastschalter betätigt werden können. Die beiden Schallaustrittsöffnungen 7 sind jeweils in einer der vier um 90 Grad von der zur Bedienung vorgesehenen Hauptfläche abgewinkelten Randfläche R der Bedieneinheit 2 vorhanden, wobei jede der beiden Schallaustrittsöffnungen 7 mit einer Gitterstruktur versehen ist.

## Patentansprüche

1. Elektrisches/elektronisches Installationsgerät der Gebäudesystemtechnik mit einer Bedieneinheit (2), sowie zumindest einer, zumindest eine Leiterplatte (8), Kontaktteile und eine Lautsprechereinrichtung aufweisenden Sockelteilanordnung (3), wobei dem in der Sockelteilanordnung (3) befindlichen Lautsprecher (5) der Lautsprechereinrichtung einerseits ein Schallkanal (6) zugeordnet ist, der andererseits in Zuordnung zumindest einer, in der Bedieneinheit (2) vorhandenen Schallaustrittsöffnung (7) endet, **dadurch gekennzeichnet, dass** die Bedieneinheit (2) von einem Designrahmen (D) umgeben ist, und dass die zumindest eine Schallaustrittsöffnungen (7) in dem für die direkte Zuordnung eines Designrahmens (D) vorgesehenen Randbereich der Bedieneinheit (2) vorhanden ist, und dass die zumindest eine Schallaustrittsöffnung (7) in einer 90 Grad von der zur Bedienung vorgesehenen Hauptfläche abgewinkelten Randfläche (R) der Bedieneinheit (2) vorhanden ist, und dass die Sockelteilanordnung (3) einen ersten Sockelteilbereich (3a) und einen vom ersten Sockelteilbereich (3a) räumlich getrennten zweiten Sockelteilbereich (3b) aufweist, und dass der zweite Sockelteilbereich (3b) zur Aufnahme der Lautsprechereinrichtung beziehungsweise des Lautsprechers (5) vorgesehen ist.

2. Elektrisches/elektronisches Installationsgerät nach Anspruch 1, **dadurch gekennzeichnet, dass** die Bedieneinheit (2) zumindest ein manuell zu betätigendes Bedienelement aufweist.

3. Elektrisches/elektronisches Installationsgerät nach einem der Ansprüche 1 oder 2, **dadurch gekennzeichnet, dass** die Bedieneinheit (2) zumindest einen Bildschirm (1) aufweist.

4. Elektrisches/elektronisches Installationsgerät nach einem der Ansprüche 1 bis 3, **dadurch gekennzeichnet, dass** die Bedieneinheit (2) zumindest einen als Touchscreen ausgeführten Bildschirm (1) aufweist.

5. Elektrisches/elektronisches Installationsgerät nach einem der Ansprüche 1 bis 4, **dadurch gekennzeichnet, dass** zumindest eine Schallaustrittsöffnung (7) mit einer Gitterstruktur versehen ist.

## Claims

1. Electrical/electronic installation device in building system engineering, having an operating unit (2) and at least one base constituent arrangement (3) showing at least one printed circuit board (8), contacting elements and a loudspeaker facility, for which purpose a sound channel (6) is assigned, on the one hand, to the loudspeaker (5) of the loudspeaker facility located in the base constituent arrangement (3) and, on the other hand, ends in association with at least one sound outlet (7) provided in the operating unit (2),
**characterised in that** the operating unit (2) is enclosed by a design frame (D) and that the at least one sound outlet (7) is located in the edge region of the operating unit (2) provided for the direct assignment of a design frame (D), and that the at least one sound outlet (7) is located in an edge area (R) of the operating unit (2) which is angled at 90 degrees from the main area provided for operating, and that the base constituent arrangement (3) has a first base constituent zone (3a) and a second base constituent zone (3b) which is spatially separated from the first base constituent zone (3a), and that the second base constituent zone (3b) is provided for accommodating the loudspeaker facility or the loudspeaker (5), as the case may be.

2. Electrical/electronic installation device according to Claim 1, **characterised in that** the operating unit (2) features at least one operating element for manual actuation.

3. Electrical/electronic installation device according to Claim 1 or Claim 2, **characterised in that** the operating unit (2) features at least one screen (1).

4. Electrical/electronic installation device according to any of Claims 1 to 3, **characterised in that** the operating unit (2) features at least one screen (1) designed as a touch screen.

5. Electrical/electronic installation device according to any of Claims 1 to 4, **characterised in that** at least one sound outlet (7) is provided with a grid structure.

## Revendications

1. Matériel d'installation électrique / électronique de technologie domotique comprenant une unité de commande (2) ainsi qu'au moins un agencement de socle (3) présentant un circuit imprime (8), des éléments de contact et un dispositif de haut-parleur, un passage acoustique (6) étant d'une part affecté au haut-parleur (5) du dispositif de haut-parleur se trouvant dans l'agencement de socle (6) se terminant d'autre part dans une ouverture de sortie du son (7) présente dans une unité de commande (2) en affectation, **caractérisé en ce que** l'unité de commande (2) est entourée d'un cadre design (D) et que l'au moins une des ouvertures de sorties du son (7) est présente dans la zone de marge de l'unité de commande (2) prévue pour l'affectation directe d'un cadre design (D) et que l'au moins une ouverture de sortie du son (7) est présente dans une zone de marge (R) de l'unité de commande (2) coudée à 90 degrés par rapport à la surface principale prévue pour la commande et que l'agencement de socle (3) présente une première zone de socle (3a) et une deuxième zone de socle (3b) séparée dans l'espace par rapport au premier socle (3) et que la deuxième zone de socle (3b) est prévue pour la réception du dispositif de haut-parleur voire du haut-parleur (5).

2. Matériel d'installation électrique / électronique selon la revendication 1, **caractérisé en ce que** l'unité de commande (2) présente au moins un élément de commande à actionner manuellement.

3. Matériel d'installation électrique / électronique selon l'une quelconque des revendications 1 ou 2, **caractérisé en ce que** l'unité de commande (2) présente au moins un écran (1).

4. Matériel d'installation électrique / électronique selon l'une quelconque des revendications 1 à 3, **caractérisé en ce que** l'unité de commande (2) présente au moins un écran (1) exécuté en tant qu'écran tactile.

5. Matériel d'installation électrique / électronique selon l'une quelconque des revendications 1 à 4, **caractérisé en ce qu'**au moins une ouverture de sortie du son (7) est munie d'une structure en caillebotis.
